Europäisches Patentamt

European Patent Office

Office européen des brevets

(11) Numéro de publication: **0 356 296**
**A1**

## (12) DEMANDE DE BREVET EUROPEEN

(21) Numéro de dépôt: **89402231.8**

(22) Date de dépôt: **08.08.89**

(51) Int. Cl.5: **F 24 D 19/10**
**G 01 K 1/08**

(30) Priorité: **17.08.88 FR 8810936**

(43) Date de publication de la demande:
**28.02.90 Bulletin 90/09**

(84) Etats contractants désignés:
**AT BE CH DE ES GB GR IT LI LU NL SE**

(71) Demandeur: **Société dite : TRIATHERM SARL**
**2 Boulevard des Nations Unies**
**F-92190 Meudon (FR)**

(72) Inventeur: **Céré, Claude-Michel**
**23 Rue de la Croix du Val**
**F-92190 Meudon (FR)**

(74) Mandataire: **Doussay, Jean**
**Société Internationale 19 Rue de la Paix**
**F-75002 Paris (FR)**

(54) Installation de chauffage d'un local par rayonnement thermique et sonde de température pour une telle installation.

(57) Installation de chauffage par infrarouges régulée à partie d'une sonde de température élaborant un signal représentatif de la Température Sèche Résultante.

Selon l'invention, le capteur (20) est placé dans un boîtier (19) placé de façon à recevoir le rayonnement thermique et comportant des ouvertures 24 propres à permettre une circulation lente d'air dans ledit boîtier.

FIG. 2

Bundesdruckerei Berlin

## Description

## INSTALLATION DE CHAUFFAGE D'UN LOCAL PAR RAYONNEMENT THERMIQUE ET SONDE DE TEMPERATURE POUR UNE TELLE INSTALLATION

L'invention se rapporte à une installation de chauffage d'un local par rayonnement thermique ( émettant principalement dans le domaine de l'infrarouge) régulée à partir d'au moins une sonde de température située dans ce local; elle concerne plus particulièrement la structure d'une telle sonde permettant d'obtenir une meilleure régulation de ce mode de chauffage.

On sait que l'impression de chaleur ressentie par un être humain dans un local à un endroit déterminé dépend essentiellement de quatre paramètres:
- la température moyenne des parois "perçue" par le corps
- la température sèche de l'air
- la vitesse relative de l'air et du corps
- le degré hydrométrique de l'air.

L'expérience a montré que pour un séjour dans le local où l'air est au repos (absence de courant d'air) et où la température se situe en dessous de 23°, le degré hydrométrique est pratiquement sans influence sur l'impression de chaleur ressentie. Par conséquent, dans ces conditions l'impression de chaleur dépend essentiellement des deux premiers paramètres cités. On définit ainsi un autre paramètre appelé Température Sèche Résultante : TSR, moyenne arithmétique de ces deux premiers paramètres. Ce paramètre est assez représentatif de l'impression de chaleur ressentie. Des appareils sont conçus pour mesurer directement ce paramètre TSR. Certains peuvent être intégrés à un système de régulation de chauffage. Une sonde de température connue de ce type comprend une enveloppe, par exemple en forme de sphère creuse, au centre de laquelle est placé un capteur de chaleur formant par exemple transducteur thermoélectrique. Ladite enveloppe est en métal; elle est fermée.

Cependant, on a constaté qu'une telle sonde ne permet pas d'obtenir des résultats satisfaisants lorsqu'elle est insérée dans le système de régulation (quel qu'il soit) d'une installation de chauffage par rayonnement thermique infrarouge. De telles installations de chauffage sont très répandues dans les locaux de grande hauteur (usines, entrepôts, etc...); elles sont généralement constituées par un réseau de conduits situés en hauteur, dans lesquels on injecte et fait brûler du gaz. Les conduits chauffés rayonnent dans le spectre infrarouge et la chaleur rayonnante est "projetée" vers le sol. L'invention concerne tout particulièrement la structure et la mise en oeuvre d'une nouvelle sonde de température plus particulièrement utilisable dans la régulation d'une telle installation de chauffage.

Dans cet esprit, l'invention concerne plus particulièrement une installation de chauffage d'un local par rayonnement thermique, régulée à partir d'au moins une sonde de température située dans ce local, caractérisée en ce que ladite sonde comporte un boîtier et un capteur thermique tel qu'un transducteur thermoélectrique, en ce que ce boîtier comprend un corps tubulaire allongé renfermant ledit capteur et au moins une ouverture au voisinage de chaque extrémité de ce corps et en ce que ledit boîtier est disposé dans le local de façon que ledit corps soit exposé à un rayonnement thermique direct et qu'une circulation lente d'air s'établisse dans celui-ci.

La sonde est installée dans le local chauffé de façon que ledit corps soit de préférence approximativement orienté perpendiculairement à un rayonnement direct de l'une des conduits de chauffage placé en hauteur et qu'il soit incliné par rapport à la verticale, pour créer les conditions d'une circulation lente d'air dans ledit corps, tout autour du capteur. Ce dernier délivre alors un signal électrique qui représente plus fidèlement que dans les systèmes connus le paramètre TSR recherché, pour ce type de chauffage et permet donc d'améliorer la régulation de température du local.

L'invention concerne aussi une sonde de température caractérisée en ce qu'elle comprend un boîtier comprenant un corps tubulaire allongé conducteur de la chaleur et un capteur thermique tel qu'un transducteur thermoélectrique logé dans ce corps, en ce que des ouvertures sont ménagées dans ce boîtier de part et d'autre dudit capteur pour permettre une circulation d'air, à faible vitesse, autour de celui-ci.

L'invention sera mieux comprise à la lecture de la description qui va suivre d'un exemple de réalisation conforme à son principe, donnée uniquement à titre d'exemple et faite en référence au dessin annexé dans lequel :

    - la figure 1 est un schéma montrant l'implantation de la sonde dans un local chauffé par rayonnement infrarouges; et
    - la figure 2 est une vue schématique à plus grande échelle de la sonde de la figure 1.

En se reportant au dessin, on a schématisé un local 11 équipé d'une installation de chauffage 12 par rayonnement infrarouge, d'un type connu. Une telle installation comporte au moins un conduit 13 métallique, suspendu en hauteur dans le local, au dessous d'un réflecteur métallique 14. Ce conduit (ou un réseau de tels conduits) est chauffé par une combustion de gaz naturel que l'on fait brûler et circuler à l'intérieur. La paroi du conduit 13 émet un rayonnement infrarouge qui est dirigé vers le sol. Un système de régulation, classique et non représenté à l'exception de la sonde de température qui fait plus particulièrement l'objet de l'invention, agit sur le débit de gaz et/ou l'extraction des produits de combustion pour stabiliser la température du local à une valeur choisie.

Ce système de régulation est piloté par une sonde de température 18, dont le rôle est d'élaborer un signal électrique aussi représentatif que possible du paramètre TSR défini ci-dessus, compte tenu de la spécificité du mode de chauffage par rayonnement.

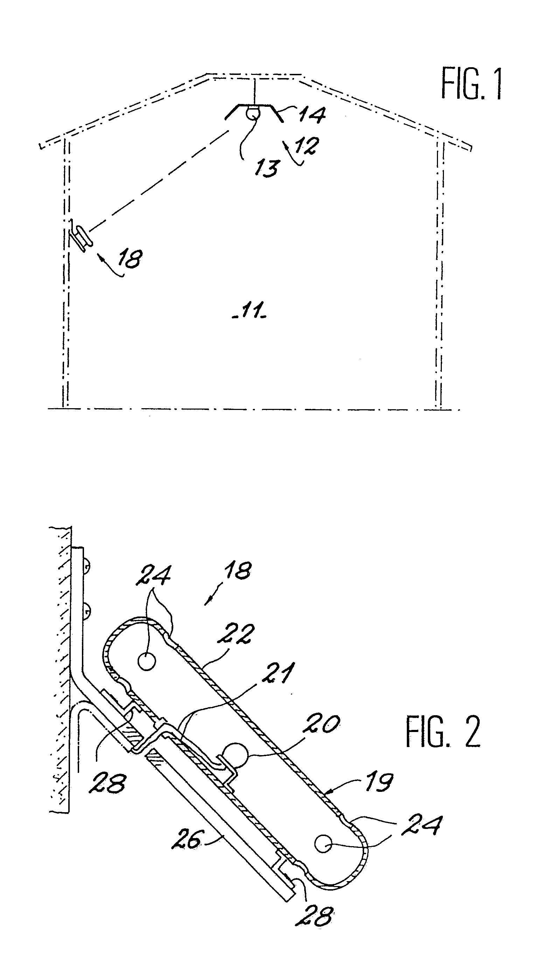

La sonde comporte un boîtier 19, en cuivre ou alliage de cuivre, ici de forme approximativement cylindrique, abritant un capteur thermique 20 formant transducteur thermoélectrique. Le signal électrique délivré par ce capteur est transmis par des conducteurs 21 vers le système de régulation. Le transducteur est d'un type connu, disponible dans le commerce. On a utilisé avec succès un tel composant ayant une pente de 10 V/°C et délivrant une tension de 2,73 V à 0°C. Le boîtier comprend essentiellement un corps tubulaire 22 allongé, rectiligne. Le capteur 20 est placé au centre de ce corps tubulaire. Des ouvertures sont ménagées dans le boîtier de part et d'autre du capteur pour permettre une lente circulation d'air autour de celui-ci. Plus précisément, on prévoit au moins une telle ouverture 24 (ici quatre trous de trois millimètres de diamètre) au voisinage de chaque extrémité du corps tubulaire 22. Hormis ces trous le boîtier est clos. Comme le montre la figure 1, le boîtier est disposé dans le local 11 de façon que le corps tubulaire 22 soit exposé à un rayonnement thermique direct et qu'une circulation lente d'air s'établisse naturellement dans celui-ci. Pour ce faire, la sonde est installée pour que le corps soit incliné. Il est ici incliné de façon à être approximativement perpendiculaire à une trajectoire directe de rayonnement en provenance d'un conduit de chauffage situé en hauteur. A cet effet, le boîtier est monté sur un support 26 par l'intermédiaire d'entretoises 28 thermiquement isolantes (en matière plastique, par exemple). Ce support est fixé à une paroi du local, en un emplacement choisi pour recevoir le rayonnement émis par le conduit 13; ledit support est agencé pour placer le corps tubulaire 22 dans la position recherchée. Eventuellement, le support peut comporter une rotule ou analogue permettant de régler l'inclinaison du boîtier. Ainsi incliné, une circulation lente d'air de bas en haut peut s'établir à l'intérieur du boîtier. Dans l'exemple décrit, le diamètre et le nombre de trous à été choisis pour obtenir cette circulation lente. On peut aussi prévoir des chicanes à l'intérieur du boîtier ou tout autre agencement ayant pour effet de stabiliser la circulation d'air dans le boîtier. Ce dernier est de couleur noire pour bien absorber le rayonnement thermique.

Avec le type de sonde qui vient d'être décrit, le signal électrique délivré par le capteur 20 représente plus fidèlement que par le passé les évolutions du paramètre TSR et permet donc d'obtenir une meilleure régulation.

## Revendications

1. Installation de chauffage d'un local par rayonnement thermique, régulée à partie d'au moins une sonde de température (18) située dans ce local, caractérisée en ce que ladite sonde comporte une boîtier (19) et un capteur thermique (20) tel qu'un transducteur thermoélectrique, en ce que ce boîtier comprend un corps tubulaire allongé (22) renfermant ledit capteur et au moins une ouverture (24) au voisinage de chaque extrémité de ce corps et en ce que ledit boîtier est disposé dans le local de façon que ledit corps soit exposé à une rayonnement thermique direct et qu'une circulation lente d'air s'établisse dans celui-ci.

2. Installation selon la revendication 1, caractérisée en ce que ladite sonde est installée de façon que ledit corps (22) soit incliné.

3. Installation selon la revendication 1 ou 2, caractérisée en ce que ledit boîtier (19) est monté sur un support (26) lui-même fixé à une paroi dudit local et en ce que ce support est agencé pour que ledit corps soit orienté approximativement perpendiculairement à une trajectoire directe de rayonnement en provenance d'un moyen de chauffage (13) situé en hauteur dans ledit local.

4. Installation selon l'une des revendications précédentes, caractérisé en ce que ledit corps tubulaire (22) comporte des trous (24) ménagés à chacune de ses extrémités et/ou des chicanes, pour assurer un mouvement ascentionnel lent de l'air prélevé dans ledit local, à l'intérieur dudit boîtier.

5. Installation selon l'une des revendications précédentes, caractérisée en ce que ledit corps tubulaire (22) allongé est en matériau thermiquement bon conducteur, de préférence en cuivre ou alliage à base de cuivre.

6. Installation selon l'une des revendications précédentes, caractérisée en ce que ledit corps tubulaire (22) allongé est de couleur noire.

7. Installation selon l'une des revendications 3 à 6, caractérisée en ce que ledit boîtier est monté sur ledit support par l'intermédiaire d'entretoises (28) thermiquement isolantes.

8. Sonde de température, caractérisée en ce qu'elle comprend un boîtier (19) comprenant un corps tubulaires (22) allongé conducteur de la chaleur et un capteur thermique (20) tel qu'un transducteur thermoélectrique logé dans ce corps, en ce que des ouvertures (24) sont ménagées dans ce boîtier de part et d'autre dudit capteur pour permettre une circulation d'air, à faible vitesse, autour de celui-ci.

9. Sonde de température selon la revendication 8, caractérisée en ce que ledit corps (22) comporte des trous (24) ménagés à chacune de ses extrémités et/ou des chicanes.

10. Sonde de température selon la revendication 8 ou 9, caractérisée en ce que ledit boîtier est monté sur un support (26) par l'intermédiaire d'entretoises (28) thermiquement isolantes, ledit support étant destiné à être fixé à une paroi ou analogue.

11. Sonde de température selon l'une des revendications 8 à 10, caractérisée en ce que ledit corps tubulaire (22) est en matériau thermiquement bon conducteur, de préférence en cuivre ou alliage à base de cuivre.

12. Sonde de température selon l'une des revendications 8 à 11, caractérisée en ce que ledit corps tubulaire (22) est de couleur noire.

FIG. 1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 054 089  (HAJTOMUE) <br> * pages 4,5 * <br> ----- | 1,3-5,8 ,9,11 | F 24 D  19/10 <br> G 01 K  1/08 |

DOMAINES TECHNIQUES RECHERCHES (Int. Cl.5)

F 24 D
G 01 K

Le présent rapport a été établi pour toutes les revendications

| Lieu de la recherche | Date d'achèvement de la recherche | Examinateur |
|---|---|---|
| BERLIN | 09-11-1989 | PIEPER C |

EPO FORM 1503 03.82 (P0402)